# EUROPÄISCHE PATENTSCHRIFT

(11) **EP 3 359 320 B1**
(45) Veröffentlichungstag und Bekanntmachung des Hinweises auf die Patenterteilung: **25.12.2019**
(21) Anmeldenummer: 16801372.0
(22) Anmeldetag: 04.10.2016
(51) Int. Cl.: B22F 3/10, B22F 3/105, B23K 9/04, B23K 26/342

(54) **BEARBEITUNGSMODUL FÜR EINE VORRICHTUNG ZUR ADDITIVEN FERTIGUNG UND VERWENDUNG DIESES BEARBEITUNGSMODULS ZUR ADDITIVEN FERTIGUNG EINES FORMKÖRPERS**
MACHINING MODULE FOR A DEVICE FOR AN ADDITIVE MANUFACTURING PROCESS AND USE OF SAID MACHINING MODULE FOR ADDITIVE MANUFACTURING AN ARTICLE
MODULE DE TRAITEMENT POUR UN DISPOSITIF DE FABRICATION ADDITIVE ET UTILISATION DUDIT MODULE DE TRAITEMENT POUR LA FABRICATION ADDITIVE D'UN OBJET

(30) Priorität: 09.10.2015 DE 102015117238
(43) Veröffentlichungstag der Anmeldung: 15.08.2018
(73) Patentinhaber: GEFERTEC GmbH, 12681 Berlin (DE)
(72) Erfinder: FISCHER, Georg, 13129 Berlin (DE); RÖHRICH, Tobias, 03185 Turnow-Preilack (DE); HASCHKE, Igor, 10437 Berlin (DE)
(74) Vertreter: Kaufmann, Sigfrid
(86) Internationale Anmeldenummer: PCT/DE2016/100461
(87) Internationale Veröffentlichungsnummer: WO 2017/059842

(56) Entgegenhaltungen:
- KR-A- 20130 022 845
- US-A1- 2004 222 198
- US-A1- 2010 276 396
- US-A1- 2015 108 094

## Beschreibung

Die Erfindung betrifft ein Bearbeitungsmodul und seiner Verwendung in einer Vorrichtung zur Herstellung von komplexen metallischen Bauteilen z. B. aus einem metallischen Werkstoffgemisch, mittels additiv-generativer Fertigung, wobei blech-, draht- oder pulverförmiger metallhaltiger Werkstoff aufgeschmolzen und schichtweise aufgetragen wird.

Additiv-generative Fertigungsverfahren nehmen bereits heute eine bedeutende Stellung innerhalb der Fertigungstechnologien ein. Der limitierende Faktor in der Prozessgeschwindigkeit ist hierbei aber oftmals das System aus Schutzgasabdeckung und Kühlung. Da der Werkstoff bei generativen Fertigungsverfahren in der Regel aufgeschmolzen wird, können sehr hohe Prozesstemperaturen auftreten. Dies tritt insbesondere bei der Verwendung metallischer Werkstoffe auf, bei denen die Schmelztemperaturen bis zu 2000°C und höher betragen. Infolgedessen entsteht zum einen eine erhebliche Erwärmung des Gesamtsystems resultierend in veränderten Gefügeeigenschaften der abgeschiedenen Metallschichten und zum anderen tritt eine erhöhte Oxidationsneigung auf, die wiederum die Eigenschaften des generierten Bauteiles, insbesondere in den Randzonen, beeinflussen kann.

Aus diesem Grunde gibt es Vorschläge, das Bauteil während seiner generativen Fertigung zu kühlen, beispielsweise mittels Eintauchens in eine Kühlflüssigkeit, wie in US 2015/0108095 A1 beschrieben. Diese Lösung zur Kühlung besitzt jedoch den Nachteil eines sehr großen gerätetechnischen Aufwandes, wobei das gesamte Bauteil zum Schluss von Flüssigkeit umschlossen ist. Weiterhin kühlt das Fluid das Bauteil von seinen Außenwänden her, sodass bei massiven Bauteilen der Wärmeabtransport über sehr große Entfernungen erfolgen muss, was die Abkühlrate senkt. Außerdem weist eine Kühlung mit einer Flüssigkeit den Nachteil auf, dass das Bauteil nach Fertigstellung nass ist und getrocknet werden muss. Auch kann es speziell bei additiv gefertigten Körpern dazu kommen, dass geschlossene Hohlräume generiert werden, in denen z. B. Reste der Kühlflüssigkeit verbleiben.

Auch das aus anderen Verfahren (z. B. der mechanischen Bearbeitung) bekannte Aufspritzen von Flüssigkeiten zur Erzielung einer schnellen Abkühlung weist diese Nachteile auf.

Weiterhin wird vorgeschlagen, mit einer gekühlten (verlorenen oder wiederverwendbaren) Druckplatte zu arbeiten. Hier sind die o. g. Nachteile des begrenzten Wärmeabtransportes aufgrund der Kühlung des Bauteils nur von seiner mit der Druckplatte im thermischen Kontakt stehenden Wand bzw. Aufstandsfläche noch stärker ausgeprägt.

Aus dem Stand der Technik ist ebenso bekannt, mit einem starken Gasstrom zu kühlen. DE 10 2013 022 056 A1 offenbart eine Vorrichtung zum Schweißen mittels Lichtbogen, die z. B. mit einer Ringdüse einen Kaltgasstrom um den Lichtbogen erzeugt, der denselben auch einschnürt. Nachteilig daran ist, dass der Gasstrom für eine ausreichende Kühlwirkung so stark sein muss, dass er die Schutzgaswirkung beim Auftragen oder sogar den Lichtbogen selbst stört.

US 2015/041025 A1 zeigt eine Vorrichtung zur additiven Fertigung, bei welcher eine Kühlgas-Düse dem Bearbeitungsstrahl, welcher auf der Werkstückoberfläche ein Schmelzbad erzeugt, nachläuft. Somit erlaubt ein durch die Kühlgas-Düse auf die noch heiße Oberfläche aufgebrachtes Kühlgas eine Zwangskühlung eines punktuellen Bereichs in Vorschubrichtung hinter dem Bearbeitungsstrahl. Zwar ist durch die räumliche Trennung des Ortes der Zwangskühlung vom Ort der Schmelzbaderzeugung eine Störung z. B. des Lichtbogens durch das Kühlgas vermieden, doch erlaubt diese Vorrichtung aufgrund dessen auch nur eingeschränkte Kühlmöglichkeiten.

Weiterhin ist es wichtig, wie bereits ausgeführt, insbesondere bei der Verwendung metallischer Werkstoffe, bei denen sich aufgrund der hohen Prozesstemperaturen eine verstärkte Oxidation feststellen lässt, die generative Fertigung unter Schutzgasatmosphäre durchzuführen. Allgemein bekannt ist, den Bauraum, in welchem das Bauteil gefertigt wird, mit Schutzgas zu spülen, wie z. B. in DE 196 49 865 C1 oder CN 104 353 832 A beschrieben. Hierfür ist jedoch ein erheblicher technischer Aufwand zur Abdichtung des Bauraumes notwendig, wie speziell am Beispiel der WO 2012/134299 A2 ersichtlich wird.

US 2015/108094 A1 bezieht sich auf ein Bearbeitungsmodul für eine Vorrichtung zur additiven Fertigung eines Formkörpers umfassend eine Werkstoffzuführungseinrichtung, eine Schutzgaszuführungseinrichtung, welche eine ringförmig um die Werkstoffzuführungseinrichtung angeordnete Ausströmöffnung aufweist, und eine Fluidzuführungseinrichtung zur Zuführung eines Fluids in Form von Schutzgas, wobei die unmittelbar mit der Werkstoffzuführungseinrichtung verbunden, ringförmig um diese angeordneten Düsen als Ringdüsen ausgeführt sind. Bei Betrieb des Schweißbrenners entsteht daher ein ununterbrochener, konzentrischer Fluidschleier um den in Zentrum befindlichen Generierwirkort.

Aufgabe der Erfindung ist es, ein Bearbeitungsmodul für eine Vorrichtung zur additiven Fertigung eines metallische Formkörpers durch lagenweisen Aufbau eines geschmolzenen blech-, draht- oder pulverförmigen Werkstoffes Formkörper bereit zu stellen, mittels dessen während der Abscheidung der Schichten sowohl eine punktuell genaue Kühlung in einem beliebig vorgebbaren Bereich des Schmelzbades als auch eine vollständige Schutzgasabdeckung, bei welcher der technische Aufwand für eine hermetische Abdichtung des Bauraumes gegen die Umgebung entfallen kann, möglich sein soll.

Die Lösung dieser Aufgabe erfolgt mit einem Bearbeitungsmodul gemäß Patentanspruch 1 sowie mit der Verwendungen des genannten Bearbeitungsmoduls gemäß den Patentansprüchen 6 bis 8; zweckmäßige Ausgestaltungen der Erfindung finden sich in den Unteransprüchen.

Unter dem Begriff "Bearbeitungsmodul" wird hierin allgemein diejenige Baugruppe einer Vorrichtung für die additiv-generative Fertigung verstanden, die zumindest eine Werkstoffzuführungseinrichtung, z. B. ein Drahtzuführmodul, umfasst, wobei der mit dieser den aufzubauenden Schichten zugeführte, blech-, draht- oder pulverförmige Werkstoff mittels Energiezufuhr, z. B. über einen Laserstrahl oder einen Lichtbogen, aufschmelzbar ist. Die Energiequelle zur Erzeugung der Energiezufuhr kann hierbei Bestandteil des Bearbeitungsmoduls sein, sie kann aber auch räumlich getrennt, z. B. außerhalb eines umhausten Fertigungs-Bauraumes, angeordnet sein.

Das erfindungsgemäße Bearbeitungsmodul ist demnach vorgesehen als Baugruppe für eine Vorrichtung zur additiven Fertigung eines metallischen Formkörpers aus mindestens einem schmelzbaren, draht-, band-, pulver- oder blechförmigen Werkstoff, der mittels Energiezufuhr (z. B. mittels Lichtbogen oder Laserstrahl) aufgeschmolzen und in schmelzflüssiger Phase in einem Generierwirkort auf dem bereits fertiggestellten Teil des herzustellenden Formkörpers abgeschieden wird, wobei der schmelzflüssige Werkstoff nach dem Abscheiden durch gezielte Kühlung unter Ausbildung eines festen Metalls erstarrt.

Unter Generierwirkort wird die Position, d. h. ein lokal begrenzte Bereich, auf der Oberfläche des bereits fertiggestellten Teils des Formkörpers verstanden, an der schmelzflüssiger Werkstoff auf die Oberfläche aufgebracht wird.

Nach Maßgabe der Erfindung umfasst das Bearbeitungsmodul neben der Werkstoffzuführungseinrichtung eine ringförmig um die Werkstoffzuführungseinrichtung ausgebildete Schutzgaszuführeinrichtung sowie eine Fluidzuführungseinrichtung zur Zuführung mindestens eines Fluids an eine Position auf oder unmittelbar neben einem auf der Oberfläche des gerade in Fertigung befindlichen Formkörpers ausgebildeten Schmelzbades.

Unter dem hierin verwendeten Begriff "Schutzgas" wird allgemein ein Gas verstanden, welches geeignet ist, die Oxidation von schmelzflüssigem Metall zu verhindern, beispielsweise ein Edelgas wie Argon, ein Prozessgas wie Kohlendioxid oder ein Inertgas wie Stickstoff.

Die Schutzgaszuführeinrichtung kann eine ringförmige Ausströmöffnung oder mehrere, einen Ring ausbildende Ausströmöffnungen aufweisen. Aufgrund dieser ringförmigen Ausgestaltung um die Werkstoffzuführungseinrichtung ist es mittels der Schutzgaszuführeinrichtung ermöglicht, eine lokale Schutzgasabdeckung, d. h. ein im Wesentlichen zylinderförmiges, mit Schutzgas ausgefülltes Volumen (Schutzgasmantel), um den zugeführten Werkstoff und den Generierwirkort zu legen.

Die Fluidzuführungseinrichtung weist vorzugsweise mehrere Düsen (d. h. Ausströmöffnungen für das Fluid) auf, die derart räumlich benachbart zu der Werkstoffzuführungseinrichtung des Bearbeitungsmoduls angeordnet sind, dass der Formkörper auf seiner Oberfläche an einer vorgebbaren Position unmittelbar neben einem Schmelzbad punktuell oder partiell mit dem Fluid anströmbar oder das Schmelzbad vollständig mit anströmendem Fluid einschließbar ist.

Hierbei kann der Teil der Oberfläche des Formkörpers, der mit dem Fluid anströmbar ist, eine beliebige Orientierung in Bezug zur Horizontalen aufweisen. Beispielsweise kann der mit dem Fluid angeströmte Teil der Oberfläche horizontal ausgerichtet sein (d. h., das Fluid trifft neben dem Schmelzbad auf den Formkörper). Der mit dem Fluid angeströmte Oberflächenbereich des Formkörpers kann auch lotrecht ausgerichtet sein (d. h., das Fluid trifft auf eine Seitenwand in einem Bereich unterhalb des Schmelzbades auf den Formkörper).

Erfindungsgemäß ist die Position der punktuellen oder partiellen Anströmung während der Fertigung beliebig variierbar, d. h., ein beispielsweise in einem Punkt auf der Oberfläche des Formkörpers auftreffender Strahl des Fluids ist in der Art mittels der Fluidzuführungseinrichtung steuerbar, dass der Auftreffpunkt um das auf der Oberfläche ausgebildete Schmelzbad rotieren, d. h. umlaufen, kann.

Es kann auch vorgesehen sein, dass das Fluid in einem (ausgedehnten) Bereich auf der Oberfläche des Formkörpers auftritt, wobei der Bereich z. B. die Form eines geschlossenen Kreises oder eines Kreisbogenabschnittes aufweisen kann. Insbesondere können hierbei die Position des Kreisbogenabschnitts und/oder seine Ausdehnung, d. h. sein Zentriwinkel, während der Fertigung variieren.

Das Fluid kann ein Kühlmittel, ein Prozessgas und/oder ein Schutzgas sein.

Die Ansteuerung der Fluidzuführungseinrichtung, d. h. die konkrete Festlegung des mit dem Fluid zu bestrahlenden Oberflächenbereiches sowie der aus den Düsen ausströmende Fluidmassestrom, erfolgt z. B. bahngeneriert, d. h., Fluidmassestrom sowie Form und Position des zu bestrahlenden Oberflächenbereiches werden aufgrund der bei der Fertigung programmierten Bahn des Generierwirkortes innerhalb der lagenweise aufzubauenden Schichten festgelegt, wobei auch die Geometriebeschreibungsdaten des Formkörpers Einfluss finden können, um beispielsweise einen Kühlmittelmassestrom entsprechend einer Wandstärke oder Strukturdimensionen des Formkörpers zu positionieren und/oder zu skalieren.

Für eine beschleunigte bzw. kontrollierte Abkühlung des in den Schichten abgeschiedenen schmelzflüssigen Werkstoffes ist mittels der Erfindung eine dem Generierwirkort nachlaufende, lokale Kühlung möglich (während der Generierwirkort zugleich von Schutzgas eingeschlossen wird). Ebenso ist eine gezielte Temperaturbehandlung, z. B. Abkühlung, des Bereiches auf der Formkörperoberfläche unmittelbar vor dem Generierwirkort möglich.

Die Gefügebildung, d. h. das Ausbilden einer Mikrostruktur in einem aus einer metallhaltigen Schmelze gebildeten metallischen Werkstoffs (d. h. eines Metalls, einer Legierung oder eines anderen metallischen Stoffgemischs), erfolgt während des Erstarrens. Aufgrund einer mit dem erfindungsgemäßen Bearbeitungsmodul durchführbaren, gezielten, aktiven Kühlung, durch z. B. lokal mittels der Fluidzuführungseinrichtung zugeführten Prozessgases, kann die Gefügebildung kontrolliert werden, indem z. B. das Erstarrungsverhalten von bereits in der Schmelze gemischten Ausgangswerkstoffen gezielt durch die Temperaturführung beim Abkühlen und Erstarren der Schmelze (unter Ausbildung z. B. einer Legierung) gesteuert wird.

Die Temperaturführung bei der additiven Fertigung, beispielsweise die Abkühlrate, kann mittels des erfindungsgemäßen Bearbeitungsmoduls während der Fertigung veränderlich sein, d. h., die Gefügebildung kann in weiten Grenzen durch die Temperaturführung mittels kontrollierter Zuführung von Kühlmittel eingestellt werden.

Durch die Erfindung ist es folglich möglich, dass Bauteile aus maßgeschneiderten metallischen Gefügen hergestellt werden, indem wiederholt schmelzflüssiger Werkstoff von lediglich Tröpfchengröße abgeschieden und einer gezielten Erstarrung (dieser Tröpfchen) unterzogen wird, wobei aufgrund der Schutzgaszuführeinrichtung eine Oxidation der Metallschmelze zuverlässig unterbindbar ist.

Die Schutzgaszuführeinrichtung ist dadurch vorteilhaft, dass ein lokal begrenzter "Schutzgasvorhang" um den schmelzflüssigen Werkstoff gelegt werden kann. Somit wird der technische Aufwand für einen gegen die Umgebung abzudichtenden Bauraum für die Vorrichtung zur generativen Fertigung entbehrlich, da der schichtweise Aufbau unter lokal aufgebauter Schutzgasatmosphäre durchführbar ist.

Die Erfindung ist anwendbar auf bekannte additive Verfahren (wie z. B. Lasersintern, Laserschmelzen, formgebendes Schweißen, US-Schweißen etc.), mittels der einzelnen Schichten in unterschiedlicher Dicke von wenigen Mikrometern bis hin zu mehreren Millimetern mittels Abscheidens schmelzflüssiger Werkstoffe erzeugt werden können.

Vorteile der Erfindung bestehen auch darin, dass ein gewünschtes Gefüge lokal erzeugbar ist. Damit können bisher gegebene, fertigungsbedingte Restriktionen im Erzeugungsprozess des Bauteils umgangen werden. Durch den lagenweisen Aufbau im Sinne der generativen Fertigung kann ein spezifisches Werkstoffsystem mit lokal definierten und auch lokal veränderlichen Eigenschaften erzeugt werden. Somit lassen sich innerhalb eines massiven Bauteils die spezifischen Werkstoffeigenschaften (aufgrund des lokal variierbaren Gefüges) verändern.

Indem die gewünschte Werkstoffstruktur erst beim "Drucken" des Bauteils direkt erzeugt wird, ist eine sehr genaue Anpassung und Variation der jeweiligen Werkstoffstruktur in den Schichten bzw. lokalen Bereichen des Formkörpers ermöglicht, sodass ein massives Bauteil herstellbar ist, welches z. B. aufgrund des jeweils ausgewählten Gefüges in einzelnen Bereichen besonders fest ist.

Gemäß einer Ausgestaltungsvariante der Erfindung umfasst die Fluidzuführungseinrichtung eine Düse, die in einer Ebene parallel zur Ebene der aufzubauenden Schicht um die Werkstoffzuführungseinrichtung rotierbar ist. Hierzu kann das Bearbeitungsmodul beispielsweise eine Rotationachse senkrecht zur aufzubauenden Schicht aufweisen, sodass durch eine Rotation des Bearbeitungsmoduls um diese Rotationsachse die Düse (in gleicher Weise) um die Rotationsachse drehbar ist.

So kann vorteilhaft der Strahl des aus der Düse strömenden Kühlmittels auf eine beliebige Position auf der Oberfläche des Formkörpers neben dem schmelzflüssig abgeschiedenen Werkstoff ausgerichtet werden, wobei z. B. bei einem wellenförmigen Verlauf der Bahn des Generierwirkortes auf der Formkörperoberfläche die Kühlung stets exakt auf den Bereich "hinter" dem Schmelzbad positionierbar ist.

Gemäß einer anderen Ausgestaltungsvariante der Erfindung umfasst die Fluidzuführungseinrichtung mehrere Düsen, die ringförmig um die Werkstoffzuführungseinrichtung angeordnet sind. Somit ist auf der Formkörperoberfläche ein ringförmig um das Schmelzbad ausgebildeter Bereich kühlbar.

Insbesondere kann vorgesehen sein, dass jede der Düsen mittels eines jeweils einzeln ansteuerbaren Ventiles geöffnet oder geschlossen werden kann. So ist es z. B. möglich, nur jeweils aus derjenigen Düse Kühlmittel strömen zu lassen, die in Vorschubrichtung des Bearbeitungsmoduls hinter der Werkstoffzuführungseinrichtung angeordnet ist.

Es kann auch vorgesehen sein, dass während des Betriebes des Bearbeitungsmoduls aus dem Fluidzuführungseinrichtung sowohl ein Kühlmittel als auch ein Prozess- oder ein Schutzgas strömt, d. h., aus einem Teil der Düsen strömt Kühlmittel und aus dem restlichen Teil der Düsen strömt Prozess- oder Schutzgas. Hierfür kann jede der Düsen mit einem jeweils einzeln ansteuerbaren Umschaltventil verbunden sein, wobei die Umschaltventile jeweils mit einer Kühlmittelzufuhrleitung und einer Prozess- bzw. Schutzgaszufuhrleitung verbunden sind. So kann aus jeder der Düsen wahlweise Kühlmittel oder Prozess- bzw. Schutzgas strömen.

Gemäß einer weiteren Ausführungsform kann anstelle des Umschaltventils ein Mischer bzw. eine Mischbatterie eingesetzt sein, mittels der eine definierte Mischung aus Schutzgas und Kühlmittel erzeugbar ist, wobei für jede der Düsen das Mischungsverhältnis identisch oder auch unterschiedlich vorgebbar sein kann.

Die Erfindung kann derart ausgebildet sein, dass als Kühlmittel für die gezielte Kühlung des abgeschiedenen schmelzflüssigen Werkstoffs ein gasförmiges Kühlmittel, z. B. ein Schutzgas, ein Kühlmittel in fester Phase, z. B. Kohlendioxidpellets bzw. pulverförmiger Kohlendioxidschnee, oder ein Aerosol verwendet wird.

Der Vorteil von Trockeneis bzw. Aerosolen ist ihr zusätzlicher Beitrag zur Wärmeabfuhr aufgrund Aufnahme von latenter Wärme bei der Sublimation bzw. Verdampfung, wobei der Formkörper im Wesentlichen trocken bleibt.

Es kann auch vorgesehen sein, dass als Kühlmittel eine Flüssigkeit, z. B. eine korrosionsverhütende Flüssigkeit oder eine kryogene Flüssigkeit (d. h. ein bei einer Temperatur unterhalb von -150°C verflüssigtes Gas), verwendet wird.

Gemäß einer weiteren Ausführungsform umfasst das Bearbeitungsmodul ein temperatursensitives Kamerasystem, mittels dessen in einem Bereich um den Generierwirkort die Temperatur der Formkörperoberfläche ortsaufgelöst erfassbar ist, sowie eine mit dem Kamerasystem und den einzeln ansteuerbaren Düsen bzw. einem Antrieb zur Rotation des Bearbeitungsmoduls um eine senkrecht zu der im Aufbau befindlichen Schicht ausgerichteten Rotationsachse verbundene Auswerte- und Steuerungseinheit. Hierbei ist die Auswerte- und Steuerungseinheit derart eingerichtet, dass sie den Kühlmittelstrom, d. h. die Positionierung, räumliche Verteilung und/oder den Massestrom, basierend auf den von dem Kamerasystem erfassten Temperaturwerten auf der Formkörperoberfläche steuert.

Es kann vorgesehen sein, dass das Bearbeitungsmodul eine Absaugvorrichtung, z. B. in Form eines Saugrüssels oder einer um die Fluidzuführungseinrichtung (in radialer Richtung außerhalb derselben) angeordneten Ringdüse, umfasst, mittels der z. B. verdampfte, als Kühlmittel verwendete Flüssigkeiten auffangbar sind, um sie beispielsweise (nach Reinigung und/oder Abkühlung) erneut zur Kühlung zu verwenden.

Insbesondere ist es bei dieser Ausführungsform möglich, mit einem starkem Kühlmittelstrom zu kühlen, da beispielsweise überschüssige, nicht verdampfte Kühlflüssigkeit mittels der Absaugvorrichtung sofort wieder absaugbar ist, sodass der Formkörper trocken bleibt.

Die Absaugvorrichtung kann auch in Form einer um die Werkstoffzuführungseinrichtung angeordneten Ringdüse ausgebildet sein, mittels der z. B. verdampfte Ausgangswerkstoffe und/oder Schweißrauch absaugbar sind. So ist in vorteilhafter Weise eine Beeinträchtigung der ortsaufgelösten Temperaturmessung mittels des temperatursensitiven Kamerasystems während der Schichtabscheidung reduziert.

Die Erfindung kann weiter derart ausgebildet sein, dass das Bearbeitungsmodul um eine parallel zur Ebene der aufzubauenden Schicht ausgerichtete Achse kipp- bzw. drehbar ist.

Die Erfindung wird nachfolgend anhand von Ausführungsbeispielen näher erläutert. Dazu zeigen in schematischer Darstellung die
- Figur 1:: das Bearbeitungsmodul während einer additiven Fertigung;
- Figur 2:: eine erste Ausgestaltungsvariante des Bearbeitungsmoduls in Schrägdraufsicht
- Figur 3:: eine zweite Ausgestaltungsvariante des Bearbeitungsmoduls in Schrägdraufsicht; und
- Figur 4:: eine dritte Ausgestaltungsvariante des Bearbeitungsmoduls im Querschnitt.

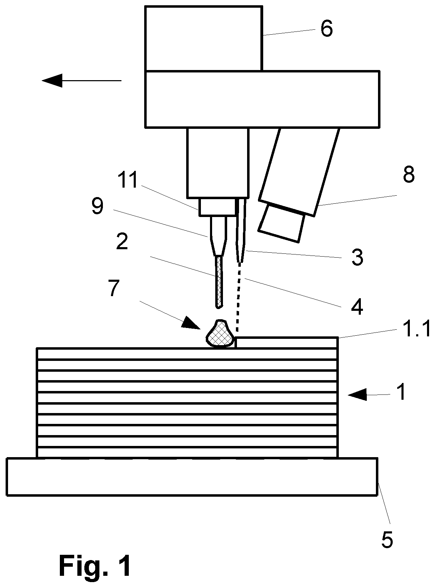

Der Formkörper 1 wird gemäß Figur 1 auf der Druckplatte 5 schichtweise aufgebaut, indem von dem durch die Werkstoffzuführungseinrichtung 9 zugeführten Ausgangswerkstoff 2, hier einem Metalldraht aus Titan, jeweils einzelne Metalltröpfchen abgeschmolzen und schmelzflüssig am Generierwirkort 7 innerhalb der Schicht 1.1 abgeschieden werden.

Die Schutzgaszufuhreinrichtung 11 mit einer ringförmig um die Werkstoffzuführungseinrichtung 9 ausgebildeten Ausströmöffnung erzeugt einen Schutzgasmantel (nicht dargestellt) um den Generierwirkort 7.

Mittels der Fluidzuführungseinrichtung 3 wird das Kühlmittel 4 gezielt in Vorschubrichtung (durch den Pfeil veranschaulicht) dem Generierwirkort 7 nachlaufend auf die Schicht 1.1 bzw. dem abgeschiedenen, noch schmelzflüssigen Tropfen des Werkstoffs 2 zugeführt, sodass er als Teil der Schicht 1.1 erstarrt. In diesem Beispiel sind die Schichtdicken stark vergrößert dargestellt.

Die temperatursensitive Kamera 8 erfasst die Temperatur der Schicht 1.1 in der Umgebung des Generierwirkortes 7. Die Auswerte- und Steuerungseinheit 6 ermöglicht die Kontrolle der Auftreffposition des Kühlmittels 4 sowie den Kühlmittelmassestrom.

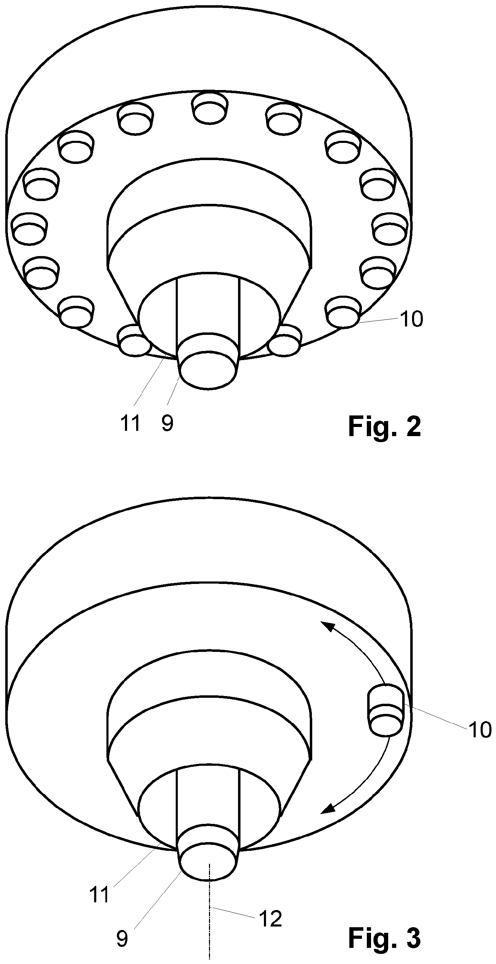

Figur 2 zeigt das Bearbeitungsmodul mit den kreisförmig um die Schutzgaszufuhreinrichtung 11 und die Werkstoffzuführungseinrichtung 9 angeordneten Düsen 10.

In Figur 3 ist ein Bearbeitungsmodul mit nur einer Düse 10 dargestellt, wobei das Bearbeitungsmodul um die Rotationsachse 12 drehbar ist.

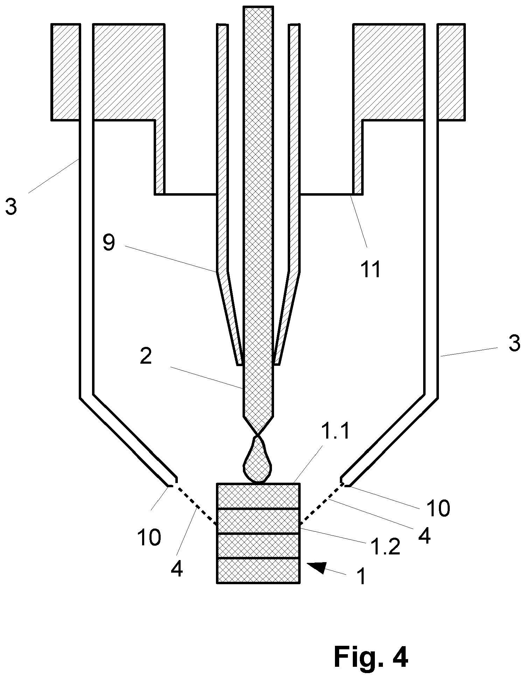

In einer dritten Ausgestaltungsvariante des Bearbeitungsmoduls gemäß Figur 4 ist die Fluidzuführungseinrichtung 3 derart ausgebildet, dass das Kühlmittel 4 mittels der Düsen 10 auf die Schichten 1.2 unterhalb der aufzubauenden Schicht 1.1 gesprüht wird, sodass die aktive Kühlung nicht von der Oberseite, sondern den Seitenwänden des Formkörpers 1 her erfolgt.

### Bezugszeichenliste

- 1: Formkörper
- 1.1: Schicht
- 1.2: Schicht
- 2: Ausgangswerkstoff
- 3: Fluidzuführungseinrichtung
- 4: Kühlmittel
- 5: Druckplatte
- 6: Auswerte- und Steuerungseinheit
- 7: Generierwirkort
- 8: temperatursensitives Kamerasystem
- 9: Werkstoffzuführungseinrichtung
- 10: Düse
- 11: Schutzgaszufuhreinrichtung
- 12: Rotationsachse

## Patentansprüche

1. Bearbeitungsmodul für eine Vorrichtung zur additiven Fertigung eines Formkörpers (1) durch Abscheiden eines schmelzbaren, blech-, draht- oder pulverförmigen Ausgangswerkstoffes (2) in einem innerhalb von einzelnen, jeweils aufeinanderfolgenden Schichten (1.1) fortbewegten Generierwirkort (7), wobei das Bearbeitungsmodul eine Werkstoffzuführungseinrichtung (9), eine Schutzgaszufuhreinrichtung (11), die eine oder mehrere ringförmig um die Werkstoffzuführungseinrichtung (9) angeordnete Ausströmöffnungen aufweist, sowie eine Fluidzuführungseinrichtung (3) zur Zuführung eines Fluids in Form von Kühlmittel (4) und/oder Schutzgas umfasst **dadurch gekennzeichnet, dass** die Fluidzuführungseinrichtung (3) eine oder mehrere Düsen (10) aufweist, die derart räumlich benachbart zu der Werkstoffzuführungseinrichtung (9) angeordnet sind, dass der Formkörper (1) auf seiner Oberfläche unmittelbar neben dem Generierwirkort (7) an einer Position, die jeweils veränderlich vorgebbar ist, punktuell oder partiell mit dem Fluid anströmbar ist, wobei
- die Fluidzuführungseinrichtung (3) eine Düse (10) umfasst, die in einer Ebene parallel zu der zu fertigenden Schicht (1.1) um die Werkstoffzuführungseinrichtung (9) rotierbar ist, oder
- die Fluidzuführungseinrichtung (3) mehrere Düsen (10) umfasst, die ringförmig um die Werkstoffzuführungseinrichtung (9) angeordnet sind, wobei ein jeweils durch die Düsen (10) strömender Fluidmassestrom für jede Düse (10) separat steuerbar ist.

2. Bearbeitungsmodul nach Anspruch 1, **dadurch gekennzeichnet, dass** die Düsen (10) jeweils mittels eines Umschaltventils und/oder Mischers mit einer Schutzgas- und einer Kühlmittelzuleitung verbunden sind.

3. Bearbeitungsmodul nach Anspruch 1 oder 2, **dadurch gekennzeichnet, dass** zumindest die Fluidzuführungseinrichtung (3) um eine senkrecht zu der zu fertigenden Schicht (1.1) ausgerichtete Rotationsachse (12) drehbar ist.

4. Bearbeitungsmodul nach einem der vorstehenden Ansprüche, **dadurch gekennzeichnet, dass** es ferner ein temperatursensitives Kamerasystem (8), mittels welchem in einem Bereich um den Generierwirkort (7) die Temperatur der Formkörperoberfläche ortsaufgelöst erfassbar ist, sowie eine mit dem Kamerasystem und der Fluidzuführungseinrichtung (3) verbundene Auswerte- und Steuerungseinheit (6), die derart eingerichtet ist, dass die Fluidzuführungseinrichtung (3) basierend auf den von dem Kamerasystem erfassten Temperaturwerten steuerbar ist, aufweist.

5. Bearbeitungsmodul nach einem der vorstehenden Ansprüche, **dadurch gekennzeichnet, dass** es eine Absaugeinrichtung zum Absaugen von Fluid und/oder Rauchgasen von der Formkörperoberfläche umfasst.

6. Verwendung des Bearbeitungsmoduls nach einem der vorstehenden Ansprüche zur additiven Fertigung eines Formkörpers (1), **dadurch gekennzeichnet, dass** das Kühlmittel (4) ein Prozessgas ist.

7. Verwendung des Bearbeitungsmoduls nach einem der Ansprüche 1 bis 5 zur additiven Fertigung eines Formkörpers (1), **dadurch gekennzeichnet, dass** das Kühlmittel ein Aerosol ist.

8. Verwendung des Bearbeitungsmoduls nach einem der Ansprüche 1 bis 5 zur additiven Fertigung eines Formkörpers (1), **dadurch gekennzeichnet, dass** das Kühlmittel Trockeneis in Form von Pulver oder Granulat ist.

## Claims

1. Machining module for a device for the additive manufacturing of a moulded body (1) through depositing a meltable, sheet, wire, or pulverulent starting material (2) in a site of generation action (7) moved on within individual, successive layers (1.1), wherein the machining module comprises a material supply device (9), a protective-gas supply device (11), which has one or more outlet openings arranged annularly about the material supply device (9), as well as a fluid supply device (3) for supplying a fluid in the form of coolant (4) and/or protective gas, **characterised in that**
the fluid supply device (3) has one or more nozzles (10), which are arranged spatially adjacent to the material supply device (9), such that fluid can flow in a punctual or in a partial manner on the surface of the moulded body (1) directly next to the site of generation action (7) at a position which can be specified in a variable manner in each case, wherein
- the fluid supply device (3) comprises a nozzle (10), which is rotatable around the material supply device (9) in a plane parallel to the layer (1.1) to be manufactured, or
- the fluid supply device (3) comprises a plurality of nozzles (10), which are arranged annularly about the material supply device (9), wherein a mass flow of fluid flowing through each nozzle (10) is separately controllable for each nozzle (10).

2. Machining module according to claim 1, **characterised in that** each of the nozzles (10) is connected to an inlet pipe for protective gas and an inlet pipe for coolant by means of a switching valve and/or a mixer.

3. Machining module according to claim 1 or 2, **characterised in that** at least the fluid supply device (3) is rotatable around an axis of rotation (12) oriented perpendicular to the layer (1.1) to be manufactured.

4. Machining module according to any of the preceding claims, **characterised in that** it further has a temperature-sensitive camera system (8) by means of which the temperature of the surface of the moulded body in an area around the site of generation action (7) can be detected in a spatially resolved manner, as well as an evaluation and control unit (6), which is connected to the camera system and the fluid supply device (3), which is configured in such a way that the fluid supply device (3) can be controlled on the basis of the temperature values detected by the camera system.

5. Machining module according to any of the preceding claims, **characterised in that** it comprises a suction device for sucking fluid and/or flue gases from the surface of the moulded body.

6. Use of the machining module according to any of the preceding claims for the additive manufacturing of a moulded body (1), **characterised in that** the coolant (4) is a process gas.

7. Use of the machining module according to any one of claims 1 to 5 for the additive manufacturing of a moulded body (1), **characterised in that** the coolant is an aerosol.

8. Use of the machining module according to any one of claims 1 to 5 for the additive manufacturing of a moulded body (1), **characterised in that** the coolant is dry ice in the form of powder or pellets.

## Revendications

1. Module d'usinage pour un dispositif destiné à la fabrication additive d'un corps moulé (1) par dépôt d'un matériau de base (2) fusible, sous forme de feuille, de fil ou de poudre, dans un site de génération (7) déplacé au sein de couches (1.1) individuelles respectivement successives, dans lequel le module d'usinage comprend un dispositif d'alimentation en matériau (9), un dispositif d'alimentation en gaz protecteur (11) présentant un ou plusieurs orifice(s) d'éjection agencé(s) de manière annulaire autour du dispositif d'alimentation en matériau (9), ainsi qu'un dispositif d'alimentation en fluide (3) destiné à alimenter un fluide sous forme de réfrigérant (4) et/ou de gaz protecteur, **caractérisé en ce que**
le dispositif d'alimentation en fluide (3) présente une ou plusieurs buse(s) (10) agencée(s) de manière spatialement adjacente(s) au dispositif d'alimentation en matériau (9) de telle sorte que la surface du corps moulé (1) peut être parcourue de manière ponctuelle ou partielle par le fluide à proximité immédiate du site de génération (7) au niveau d'une position pouvant être spécifiée de manière respectivement variable, dans lequel
- le dispositif d'alimentation en fluide (3) comprend une buse (10) qui est rotative autour du dispositif d'alimentation en matériau (9) dans un plan parallèle à la couche à fabriquer (1.1), ou
- le dispositif d'alimentation en fluide (3) comprend plusieurs buses (10) agencées de manière annulaire autour du dispositif d'alimentation en matériau (9), dans lequel un débit massique de fluide traversant respectivement les buses (10) peut être commandé séparément pour chaque buse (10).

2. Module d'usinage selon la revendication 1, **caractérisé en ce que** les buses (10) sont reliées à une conduite d'amenée de gaz protecteur et de réfrigérant respectivement au moyen d'une vanne de commutation et/ou d'un mélangeur.

3. Module d'usinage selon la revendication 1 ou 2, **caractérisé en ce qu'**au moins le dispositif d'alimentation en fluide (3) est pivotant autour d'un axe de rotation (12) orienté perpendiculairement à la couche à fabriquer (1.1).

4. Module d'usinage selon l'une quelconque des revendications précédentes, **caractérisé en ce qu'**il présente en outre un système de caméra thermosensible (8) au moyen duquel la température de la surface du corps moulé peut être enregistrée avec une résolution locale dans une région située autour du site de génération (7), ainsi qu'une unité d'évaluation et de commande (6) reliée au système de caméra et au dispositif d'alimentation en fluide (3) et conçue de telle sorte que le dispositif d'alimentation en fluide (3) peut être commandé en fonction des valeurs de température enregistrées par le système de caméra.

5. Module d'usinage selon l'une quelconque des revendications précédentes, **caractérisé en ce qu'**il comprend un dispositif d'aspiration destiné à aspirer du fluide et/ou des gaz de combustion depuis la surface du corps moulé.

6. Utilisation du module d'usinage selon l'une quelconque des revendications précédentes pour la fabrication additive d'un corps moulé (1), **caractérisée en ce que** le réfrigérant (4) est un gaz de procédé.

7. Utilisation du module d'usinage selon l'une quelconque des revendications 1 à 5 pour la fabrication additive d'un corps moulé (1), **caractérisée en ce que** le réfrigérant est un aérosol.

8. Utilisation du module d'usinage selon l'une quelconque des revendications 1 à 5 pour la fabrication additive d'un corps moulé (1), **caractérisée en ce que** le réfrigérant est de la neige carbonique sous forme de poudre ou de granulés.
